Europäisches Patentamt

European Patent Office

Office européen des brevets

(11) Veröffentlichungsnummer: **0 405 158 A1**

# EUROPÄISCHE PATENTANMELDUNG

(21) Anmeldenummer: 90110201.2

(22) Anmeldetag: 30.05.90

(51) Int. Cl.5: **D01H 1/16,** D01G 15/32, D01G 19/24, D03D 49/02, B65H 54/72, B23Q 1/02

(30) Priorität: 29.06.89 DE 3921274

(43) Veröffentlichungstag der Anmeldung:
02.01.91 Patentblatt 91/01

(84) Benannte Vertragsstaaten:
CH DE FR IT LI

(71) Anmelder: **Zinser Textilmaschinen GmbH**
**Hans-Zinser-Strasse Postfach 1480**
**D-7333 Ebersbach/Fils(DE)**

(72) Erfinder: **Kühl, Hans, Dipl.-Ing.**
**Porschestrasse 11**
**D-7311 Schlierbach(DE)**
Erfinder: **Städele, Norbert, Dipl.-Ing.(FH)**
**Papiermühle 86**
**D-7320 Göppingen(DE)**
Erfinder: **Weimar, Michael, Dipl.-Ing. (TH)**
**Rechbergstrasse 5**
**D-7333 Ebersbach/Fils(DE)**

(54) Zwischenständer für Spinn- oder Zwirnmaschinen und Verfahren zum Herstellen des Zwischenständers.

(57) Die Erfindung betrifft ein Tragelement (1) für Spinnereimaschinen, insbesondere einen Zwischenständer für Spinn- oder Zwirnmaschinen und ein Verfahren zum Herstellen derartiger Tragelemente.

Das Tragelement (1) ist aus Reaktionsharzbeton gefertigt und weist Befestigungsmittel (5, 6, 9, 17, 20, 21) zum positionsgenauen Befestigen von Anbauteilen auf. Die Befestigungsmittel (5, 6, 9, 17, 21) sind vorzugsweise in Anschlußelementen (3, 4, 15, 18, 19) angeordnet, die, um die Übertragung von Vibrationen auf benachbarte Maschinenteile zu verhindern, voneinander getrennt in das Tragelement (1) aus Reaktionsharzbeton eingegossen sind.

FIG.1

EP 0 405 158 A1

# ZWISCHENSTÄNDER FÜR SPINN- ODER ZWIRNMASCHINEN UND VERFAHREN ZUM HERSTELLEN DES ZWISCHENSTÄNDERS

Die Erfindung betrifft ein Tragelement in Spinnereimaschinen, insbesondere einen Zwischenständer für Anbauteile von Spinn-, Vorspinn- oder Zwirnmaschinen, unter Verwendung von schallschluckendem Werkstoff und ein Verfahren zum Herstellen eines derartigen Zwischenständers. Die Erfindung ist jedoch auch an anderen Tragelementen von Spinnereimaschinen wie bspw. den Trägern für die Lager von Streckwerkswalzen ausführbar.

Spinn- oder Zwirnmaschinen weisen eine beträchtliche Baulänge auf und sind aus mehreren Sektionen, die zwischen zwei Endgestelle eingeschaltet sind, zusammengesetzt. Die Sektionen mit ihren verschiedenen Längsbauteilen, wie Spindelbank, Ringbank, Streckwerksträger, Fadenführerschiene etc. sind untereinander verbunden und über sogenannte Zwischenständer auf dem Boden abgestützt. Die Zwischenständer werden üblicherweise als massive Graugußkörper, oder, wie beispielsweise durch die DE 37 20 631 A1 bekannt, als geschweißte Blechkörper gefertigt.

Eine solche Bauweise hat sich in der Praxis im Prinzip zwar bewährt, weist aber unter anderem den Nachteil auf, daß die Laufgeräusche vor allem der Spindeln auf das Gestell übertragen und teilweise als Schall vom ganzen, aus Spindelbank und übriger Maschine bestehenden Resonanzkörper abgestrahlt werden.

Es sind daher in der Vergangenheit bereits verschiedene Versuche unternommen werden, die Lärmentwicklung solcher Spinnereimaschinen einzudämmen.

Durch die DE-AS 26 16 758 ist eine Spinnmaschine Stand der Technik, bei der die auf die Spindelvibrationen zurückgehenden Geräusche bzw. die Weiterleitung dieser Vibrationen innerhalb der Maschine sowie die Bildung von Resonanzschwingungen dadurch verhindert werden sollen, daß die Spindelbankabschnitte auf geteilte Querträger montiert werden, die ihrerseits auf Schwingungsdämpfern aufliegen.

Eine ähnliche Ausführungsform ist im schweizerischen Patent 465 456 beschrieben, das eine Zwirnmaschine betrifft, deren beidseitig angeordnete Spindelbänke über eine Vielzahl von Querstegen zu einem starren Rahmen zusammengebaut sind, der seinerseits über allseitig wirksame Dämpfungsglieder mit dem Maschinengestell verbunden ist.

Durch die DE 33 44 440 A1 ist bekannt, das Resonanzverhalten von in Textilmaschinen eingesetzten Tragelementen dadurch positiv zu beeinflussen, daß man solche Tragelemente als Stahlguß- oder Blechschweißkonstruktion ausführt und anschließend mit einem geeigneten Dämmstoff, wie beispielsweise Betongemisch, Polystyrenschaum oder ähnlichem ausgießt.

Dabei wird die Maßgenauigkeit der gegenseitigen Abstände von Befestigungsmitteln wie Bohrungen, Gewinden, Auflagern usw. dadurch gewährleistet, daß sie in den Blechschalen angeordnet sind. Das hat aber den gravierenden Nachteil, daß Vibrationen oder Körperschall von Maschinenteilen über die Blechschalen auf andere Maschinenteile übertragen werden und die Dämpfungswirkung der Ausgußmasse sich in engen Grenzen hält.

Aus dem Werkzeugmaschinenbau ist außerdem die Verwendung von Reaktionsharzbeton beim Bau von Maschinengestellen bekannt. Dieser Reaktionsharzbeton, der oft auch als Polymerbeton bezeichnet wird, besteht aus einem Füllmaterial - Granit- oder Quarzsand mit unterschiedlicher Korngröße - und einem Kunstharzanteil von etwa 6 bis 7%. Hierbei handelt es sich aber um besonders massige, dickwandige, schwermaschinenartige Teile, die mit ihrer Masse Schwingungen vorbeugen sollen.

Ausgehend vom vorgenannten Stand der Technik liegt der Erfindung die Aufgabe zugrunde, ein kostengünstiges Tragelement in Spinnereimaschinen, insbesondere einen Zwischenständer für Anbauteile von Spinn-, Vorspinn- oder Zwirnmaschinen zu schaffen, das/der in der Lage ist, die an Spinn- oder Zwirnmaschinen auftretenden Vibrationen wirkungsvoll zu dämmen und das/der außerdem eine paßgenaue Montage der Sektionen ermöglicht. Eine weitere Aufgabe der Erfindung besteht darin, ein kostengünstiges Verfahren zum raschen Herstellen von großen Stückzahlen derartiger Tragelemente anzugeben.

Diese Aufgabe wird erfindungsgemäß dadurch gelöst, daß das Tragelement aus Reaktionsharzbeton geformt ist und in gegenseitigem Abstand angeordnete Befestigungsmittel für das positionsgenaue Befestigen von Anbauteilen aufweist. In vorteilhafter Ausführung der Erfindung sind die Befestigungsmittel in eingegossenen Anschlußelementen angeordnet. Da auf die Blechschalen verzichtet wird und das Tragelement nur noch aus dem Grundkörper aus Reaktionsharzbeton besteht, in den die Befestigungsmittel eingebracht bzw. die in aller Regel aus Metall bestehenden Anschlußelemente unter Zwischenschaltung von dämmendem Reaktionsharzbeton eingegossen sind, weisen diese Tragelemente ein sehr gutes Dämpfungsverhalten, insbesondere bezüglich der Spindelvibration auf, was zu einer erheblichen Schalldämmung führt.

Es gibt Tragelemente, an die in bestimmten Bereichen andere Anforderungen an die Materialkennwerte gestellt werden als in anderen Bereichen. Bspw. kann dort höhere Festigkeit, höherer E-Modul, höhere Verschleißfestigkeit und dergl. gefordert sein. Hier bietet das vorliegende Verfahren die Möglichkeit, beim Befüllen derjenigen Bereiche der Hohlform, in denen ein oder mehrere Bereiche der Tragelemente mit unterschiedlichen Anforderungen an die Materialkennwerte ausgeformt werden, Polymerbetongemische zu verwenden, durch die die anderen Materialkennwerte erzielt werden oder diese Bereiche der Hohlform anders zu behandeln, bspw. beim Aushärtevorgang erhöhter Temperatur auszusetzen.

Es gibt auch Tragelemente, bei denen Anschlußelemente in verschiedenen Serien in etwas anderer Position liegen müssen, bspw. Auflagen für Spindelbänke in Abhängigkeit von der vorgesehenen Hülsenlänge. Um hierfür nicht eine Mehrzahl unterschiedlicher Hohlfomen zu benötigen, ist erfindungsgemäß vorgesehen, diese Auflagen getrennt in einer gesonderten Hohlform ebenfalls aus Polymerbeton zu fertigen und sie in der jeweils erforderlichen Position am Tragelement zu Befestigen. Das Befestigen kann vorteilhafterweise durch Kleben erfolgen. Diese verfahrensweise bietet die Möglichkeit, diesen getrennt gefertigten Teilen gegebenenfalls durch Verwendung einer anderen Polymerbetonmischung andere Materialkennwerte zu geben als dem Haupttragelement.

In anderen Fällen ist es vorteilhaft, die Hohlform mit verschiebbaren oder auswechselbaren Formenteilen auszustatten, die je nach der benötigten Position von Anschlußteilen an den betreffenden Stellen der Hohlform angebracht werden können.

Die Befestigungsmittel der Anschlußelemente werden vorzugsweise bereits vor deren Vergießen in den Grundkörper fertiggestellt und während des Gießvorganges exakt in einer definierten Lage fixiert. Durch diese Maßnahme wird sichergestellt, daß die zugehörigen Anbauteile der Sektionen paßgenau positioniert werden können.

Die Anschlußelemente können platten-, schalen- oder büchsenförmig sein und Befestigungsmittel in Form von Bohrungen, Gewindebohrungen, Auflagen oder in sonstiger Form aufweisen.

In anderen Fällen ist es vorteilhaft, die Anschlußelemente erst in den Grundkörper einzugießen und anschließend nach dem Aushärten des Gusses die Befestigungsmittel fertig zu bearbeiten. Auf diese Weise kann eine noch größere Maßhaltigkeit zwischen den einzelnen Befestigungsmitteln erzielt werden, da die Maßhaltigkeit nicht durch eventuellen Schrumpf des Gußmaterials beeinträchtigt werden kann.

Da das Gesamtvolumen des Zwischenständers aus Kostengründen und bei den dem Leichtmaschinenbau zuzurechnenden Spinnereimaschinen gering sein soll, weist der erfindungsgemäße Zwischenständer neben einem Durchbruch in seinem mittleren Bereich noch eine Einziehung im Bereich seiner Fußansätze auf. Im oberen Teil des Zwischenständers sind zwei gestufte Bohrungen zur Aufnahme von Gatterstangen eingelassen. Diese gestuften Bohrungen werden entweder bereits beim Gießen durch Einlassen eines entsprechenden Kernstückes bzw. durch Einlegen von Anschlußelementen erstellt oder in einem nachfolgenden Bearbeitungsgang eingebracht.

Desweiteren ist die Außenkontur des Zwischenständers für die Aufnahme oder den Anbau weiterer Bauteile ausgelegt. So können beispielsweise seitliche Auskragungen mit schalenförmigen Aufnahmen maßhaltig angegossen oder durch nachträgliche Bearbeitung maßhaltig angeformt sein. Diese schalenförmigen Aufnahmen können auch durch schalenförmige Anschlußelemente gebildet werden, die in die Auskragungen eingegossen werden.

Weitere Einzelheiten der Erfindung sind einem nachfolgend anhand der Zeichnungen dargestellten Ausführungsbeispiel entnehmbar. Es zeigen:

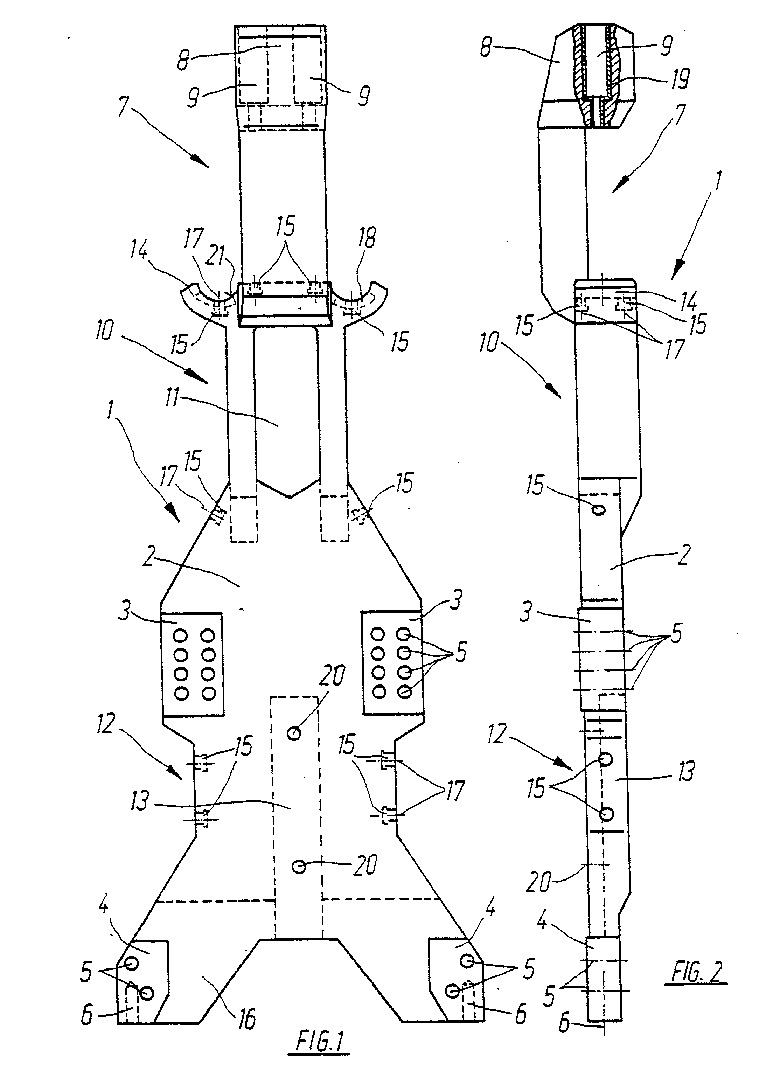

Fig. 1 einen erfindungsgemäßen Zwischenständer in Vorderansicht,

Fig. 2 den Zwischenständer gemäß Fig. 1 in Seitenansicht, teilweise im Schnitt.

Fig. 3 die Ansicht einer Hohlform zum Herstellen des Zwischenständers.

Fig. 4 eine andere Ausführungsform eines Zwischenständers in Vorderansicht

Fig. 5 eine Einzelheit im Ausschnitt

Spinnmaschinen, insbesondere Ringspinnmaschinen haben oft beträchtliche Länge. Sie weisen in der Regel zwei Endgestelle und eine Vielzahl dazwischengeschaltete Sektionen auf. Die Sektionen, die eine Vielzahl von Längsbauteilen, wie Spindelbank, Ringbank, Streckwerksträger, Unterwalzen etc. aufweisen, sind untereinander verbunden und durch die in den Figuren dargestellten Tragelemente 1 (Zwischenständer) abgestützt.

Die erfindungsgemäßen Zwischenständer 1 weisen einen Grundkörper 2 aus Reaktionsharzbeton, auch Polymerbeton genannt, auf. Vorzugsweise sind in den Grundkörpern 2 räumlich voneinander getrennte Anschlußelemente 3, 4, 15, 18, 19 eingegossen, die zur paßgenauen Befestigung der Anbauteile dienen. Die Anschlußelemente 3, 4, 15, 18, 19 weisen zu diesem Zweck Befestigungsmittel in Form von Bohrungen 5, 9, Gewindebohrungen 6, 17 und Auflagen 21 auf.

So besitzen die im Bereich der Fußansätze 16 eingelassenen Anschlußelemente 4 außer horizontalen Befestigungsbohrungen 5 zusätzlich wenigstens eine vertikale Gewindebohrung 6 für den Anbau höhenverstellbarer (nicht dargestellter) Fußstücke. Die Anschlußstücke 3 zum Befestigen der Spindelbänke haben nur mehrere Durchgangsbohrungen 5 als Befestigungselemente. Die Gewindebüchsen 15 enthalten eine Gewindebohrung 17, mit deren Hilfe Abdeckungen, Leitungskanäle usw. be-festigbar sind. Die für die Streckwerksträger vorgesehenen schalenförmigen Anschlußelemente 18 sind mit Befestigungsmitteln in Form von Auflageflächen 21 und Gewindebohrungen 17 versehen. Diese Gewindebohrungen 17 können jedoch auch in gesonderten, neben den schalenartigen An-schlußelementen 18 eingegossenen Gewindebüchs-en 15 angeordnet sein. Die Befestigungselemente der zur Aufnahme der Gatterstangen bestimmten Anschlußelemente 19 in Form von Büchsen entsprechenden lichten Durchmessers bestehen aus Stufenbohrungen 9.

Für manche Anschlußteile, insbesondere solche, durch die keine hohen Kräfte auf den Grundkörper 2 übertragen werden, können Befestigungsmittel auch ohne Anschlußelemente unmittelbar im Grundkörper 2 angebracht werden, wie dies bspw. an den Durchgangsbohrungen 20 dargestellt ist. Derartige Befestigungsmittel 20 können ebenso wie bspw. die Befestigungsmittel 9 für die Gatterstangen durch eingelegte, nach dem Guß zu entfernde Kerne geformt oder nach Fertigstellen des Grundkörpers 2 durch Bohren eingebracht werden.

Die in den Anschlußelementen 3, 4, 15, 18, 19 angeordneten Befestigungelemente 5, 6, 17, 21 werden vorteilhafterweise bereits vor dem Eingießen dieser Bauteile in den Grundkörper 2 fertiggestellt. Es ist jedoch auch denkbar, daß die Anschlußelemente 3, 4 erst nach dem Eingießen, insbesondere erst dem Aushärten und einem dabei erfolgenden Schrumpfen des Zwischenständers, ei-ner entsprechenden Bearbeitung unterzogen wer-den.

Im Kopfteil 8 des Zwischenständers 1 sind gestufte Bohrungen 9 für die Montage von (nicht dargestellten) Gatterstangen vorgesehen. Diese Bohrungen 9 werden ebenfalls bereits beim Gießen des Grundkörpers 2 bspw. durch Einlegen eines nach dem Aushärten des Zwischenständers 1 zu entfernenden Kernes erstellt. Vorteilhafterweise werden Anschlußelemente 19 z. B. Buchsen aus Leichtmetall oder Kunststoff eingegossen. Die Bohrungen 9 bzw. die eingegossenen Anschlußelemente 19 bedürfen somit keiner weiteren Nachbearbeitung. Es ist selbstverständlich auch hier möglich, die Bohrungen 9 erst im Anschluß an das Gießen fertigzustellen bzw. erst dann einzubringen.

Die C-förmige Ausbildung des oberen Bereiches 7 des Zwischenständers 1 hat insbesondere den Vorteil, daß die gestuften Bohrungen 9 von unten gut zugängig sind. Auf diese Weise ist eine einfache und sichere Fixierung der von oben in die Bohrungen 9 eingeführten Gatterstangen möglich.

Dem Grundkörper 2 sind seitliche Auskragungen 14 zur Aufnahme der schalenförmigen Anschlußelemente 18 angeformt. Alternativ kann auch vorgesehen sein, anstelle dieser eingegossenen Einlegeteile die Kontur des Grundkörpers 2 selbst entsprechend auszuformen.

Wie aus den beiden Figuren ersichtlich, sind sämtliche Befestigungsmittel 5, 6, 9, 17, 20, 21, voneinander getrennt, das heißt separat im Tragelement 1 angeordnet. Auf diese Weise wird verhindert, daß Vibrationen von einem Anbauteil auf ein benachbartes übertragen werden können. Der Grundkörper 2 aus Reaktionsharzbeton dämpft vielmehr auftretende Vibrationen, die insbesondere an den an den Anschlußelementen 3 befestigten Spindelbänken entstehen können. Da einerseits eine Dämpfung der auftretenden Vibrationen und andererseits ein Überleiten dieser Vibrationen auf benachbarte Bauteile wirkungsvoll vermieden wird, führt der Einsatz der erfindungsgemäßen Tragelemente zu einer erheblichen Senkung des Lärmpegels in den Spinnereien.

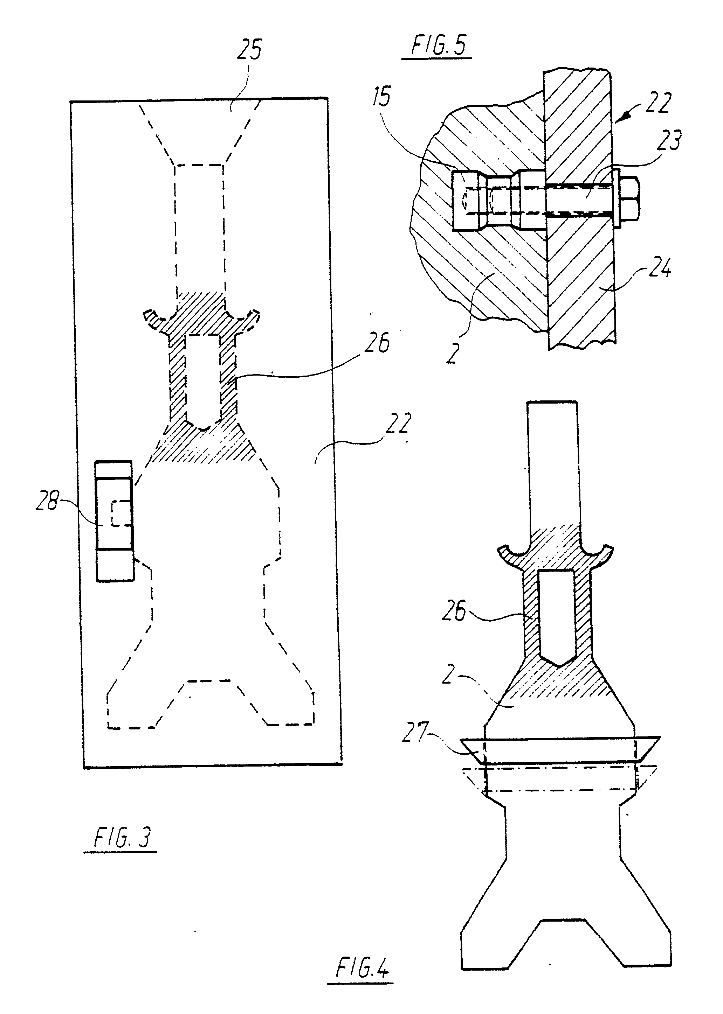

Zum Herstellen des erfindungsgemäßen Tragelementes 1 dient eine teilbare Hohlform 22 aus Stahl oder Aluminium wie in Fig. 3 dargestellt. Die Einlegeteile wie 3, 4, 15, 18, 19 werden gemäß Fig. 5 mittels Halteschrauben 23 durch die an den betreffenden Stellen der Wand 24 der Hohlform 22 maßhaltig angeordnete Bohrungen befestigt. Dann wird die Hohlform durch einen Einfülltrichter 25 mit dem schüttfähigen/flüssigen Polymer/Füllstoffgemisch befüllt und das Gemisch laufend durch Rütteln der Hohlform verdichtet.

Das Gemisch besteht in bekannter Weise aus aushärtbarem Polymergemisch und Füllstoffen, insbesondere Quarzsand mit Korngrößen von bspw. 0,8 mm bis 8 mm.

Es empfiehlt sich, ein Polymergemisch zu verwenden, das in vergleichsweise kurzer Zeit, bspw. einer halben Stunde aushärtet, damit mit nur einer der an sich teuren Formen in angemessener Zeit die in der Regel Vielzahl benötigter Tragelemente hergestellt werden kann.

Wenn das Polymergemisch ausgehärtet ist, werden die Einlegeteile durch Entfernen der Halteschrauben 23 gelöst, die Hohlform 22 geöffnet und das Tragelement Zwischenständer 1 verwendungsfertig entnommen. Eine weitere Bearbeitung ist nicht erforderlich, wenn nicht das Anbringen von Befestigungsmitteln wie (weitere) Gewindebohrungen 17 in den Befestigungselementen 3, 4 usw. wegen besonders hoher Anforderungen an die Maßgenauigkeit erst nach dem mit dem Aushärten verbundenen Schrupfen des Tragelementes 1 vorgesehen ist.

Wenn in dem in Fig. 3 durch Schraffur gekennzeichneten Bereich 26 eines Zwischenständers andere Anforderungen an die Materialkennwerte gestellt werden als in anderen Bereichen, kann dieser Bereich mit Polymerbetongemisch befüllt werden, durch das die anderen Materialkennwerte erzielt werden. Um die verschiedenen Bereiche der Hohlform 22 mit dem vorgesehenen Polymergemisch befüllen zu können, können die den Bereichen zugedachten Chargen nach Rauminhalt oder Gewicht abgemessen und aufeinanderfolgend eingefüllt werden. Die nicht flüssigen, sondern rieselfähigen oder allenfalls zähflüssigen Polymergemische mischen sich in der Hohlform nicht, sondern schichten sich übereinander.

Um Anschlußelemente wie bspw. Auflagen 27 für Spindelbänke in unterschiedlichen, in Fig. 4 ausgezogen bzw. strichpunktiert angedeuteten Höhen anordnen zu können, werden diese Auflagen getrennt in einer gesonderten Hohlform ebenfalls aus Polymerbeton gefertigt und in der jeweils erforderlichen Position am Tragelement 1 befestigt, vorteilhafterweise angeklebt. Auch in derartige getrennt gefertigte Anschlußelemente 27 können gegebenenfalls andere Anschlußelemente positionsgenau eingegossen werden.

In Fig. 3 ist auf der linken Seite der Hohlfom 22 ein auswechselbares oder höhenverstellbares Formenteil 28 dargestellt, das in derjenigen Position - im dargestellten Beispiel: in derjenigen Höhe - an der Hohlform 22 angebracht werden kann, in der das durch dieses Formenteil 28 ausgeformte Anschlußelement stehen soll. Es versteht sich, daß auf der rechten Seite ein entsprechendes Teil vorgesehen sein muß.

## Bezugszahlenliste

1 Tragelement (Zwischenständer)
2 Grundkörper
3 Anschlußelemente
4 Anschlußelemente
5 Bohrung
6 Gewindebohrung
7 oberer Bereich
8 Kopfteil
9 gestufte Bohrung
10 mittlerer Bereich
11 Durchbruch
12 unterer Bereich
13 Einziehung
14 Auskragung
15 Anschlußelement
16 Fußansatz
17 Gewindebohrung
18 Anschlußelement
19 Anschlußelement
20 Bohrung
21 Auflagefläche
22 Hohlform
23 Schrauben
24 Wand der Hohlform
25 Einfülltrichter
26 bestimmte Bereiche
27 Auflage für Spindelbänke
28 Formenteile

## Ansprüche

1. Tragelement in Spinnereimaschinen, insbesondere Zwischenständer für Anbauteile, schallschluckenden Werkstoff enthaltend, dadurch gekennzeichnet, daß das Tragelement (1) aus Reaktionsharzbeton geformt ist und in gegenseitigem Abstand angeordnete Befestigungsmittel (5, 6, 9, 17, 21) für das positionsgenaue Befestigen der Anbauteile aufweist.

2. Tragelement nach Anspruch 1, dadurch gekennzeichnet, daß die Befestigungsmittel (20) unmittelbar im Tragelement (1) angeordnet sind.

3. Tragelement nach Anspruch 1, dadurch gekennzeichnet, daß die Befestigungsmittel (5, 6, 9, 17, 21) in in das Tragelement (1) eingegossenen Anschlußelementen (3, 4, 15, 18, 19) angeordnet sind.

4. Tragelement nach Anspruch 1, dadurch gekennzeichnet, daß das Tragelement (1) Bereiche (26) mit unterschiedlichen Materialkennwerten (Festigkeitsanforderungen) aufweist.

5. Tragelement nach Anspruch 1, dadurch gekennzeichnet, daß das Tragelement (1) aus wenigstens zwei, untrennbar verbundenen Einzelelementen (2, 27) aus Reaktionsharzbeton besteht.

6. Tragelement nach Anspruch 5, dadurch gekennzeichnet, daß die Einzelelemente (2, 27) eines Tragelementes (1) klebverbunden sind.

7. Verfahren zum Herstellen von Tragelementen in Spinnereimaschinen, insbesondere von Zwischenständern für Anbauteile, unter Verwendung von schallschluckendem Werkstoff, dadurch gekennzeichnet, daß in eine teilbare Hohlform (22), in deren Innerem Befestigungsmittel (5, 6, 9, 17, 21) für das positionsgenaue Befestigen der Anbauteile in gegenseitigem Abstand gehaltert sind, Reaktionsharzbeton gefüllt, durch Rütteln verdichtet und nach Aushärten der nur aus Reaktionsharzbeton bestehende Körper des Tragelementes (1) fertig entnommen wird.

8. Verfahren nach Anspruch 7, dadurch gekennzeichnet, daß Bereiche der Hohlform (22), in denen Bereiche (26) des Tragelementes (1) mit abweichenden Spezifikationen (Festigkeitsanforderungen) ausgeformt werden, einer abweichenden Behandlung unterzogen werden.

9. Verfahren nach Anspruch 8, dadurch gekennzeichnet, daß beim Befüllen derartiger Bereiche (26) Reaktionsharzbeton verwendet wird, der die geforderten abweichenden Spezifikationen (Festigkeitswerte) erbringt.

10. Verfahren nach Anspruch 8, dadurch gekennzeichnet, daß derartige Bereiche (26) einer abweichenden thermischen Behandlung unterzogen werden.

11. Verfahren nach Anspruch 7, dadurch gekennzeichnet, daß das Tragelement (1) aus wenigstens zwei, durch Kleben bleibend verbundenen Einzelelementen (2, 27) aus Reaktionsharzbeton hergestellt wird.

12. Verfahren nach Anspruch 11, dadurch gekennzeichnet, daß getrennt gefertigte Einzelelemente eines Tragelementes aus Reaktionsharzbeton unterschiedlicher Spezifikation (Festigkeit) gefertigt werden.

13. Verfahren nach Anspruch 9, dadurch gekennzeichnet, daß Formvarianten eines Tragelementes durch austauschbare und/oder lageveränderbare Formenteile (28) der Hohlform (22) erzielt werden.

FIG.1

FIG.2

FIG.5

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | GB-A-2019454 (F.LLI MARZOLI & C.SPA.) <br> * Seite 2, Zeilen 4 – 55; Figuren 1, 3, 4 * <br> --- | 1-8, 11, 13 | D01H1/16 <br> D01G15/32 <br> D01G19/24 |
| Y | EP-A-190538 (FRITZ STUDER AG) <br> * Seite 1, Zeilen 1 – 14 * | 1, 4, 7 | D03D49/02 <br> B65H54/72 |
| Y | * Seite 12, Zeilen 15 – 25 * <br> --- | 2, 3 | B23Q1/02 |
| Y | WERKSTATT UND BETRIEB. <br> vol. 121, no. 4, 01 April 1988, MÜNCHEN DE <br> Seiten 291 – 294; H.Schultz: <br> "Reaktionsharzbeton im Maschinenbau" <br> * Seite 293, Spalte 1, Zeile 19 – Spalte 2, Zeile 23 * <br> --- | 5, 6, 11 | |
| Y | MACHINERY AND PRODUCTION ENGINEERING <br> vol. 135, no. 3482, 10 Oktober 1979, BURGESS HILL GB <br> "Machine beds – concrete goes into the mix" <br> * Seite 68, Spalte 3, Zeilen 1 – 4 * <br> --- | 8 | |
| Y | WERKSTATT UND BETRIEB. <br> vol. 121, no. 10, 01 Oktober 1988, MÜNCHEN DE <br> Seiten 835 – 841; H.Scholl: <br> "Erfahrungen mit Maschinenbetten aus Reaktionsharzbeton" <br> * Seite 835, Spalte 2, Zeilen 10 – 13 * <br> ------ | 13 | RECHERCHIERTE SACHGEBIETE (Int. Cl.5 ) <br><br> D01H <br> D01G <br> D03D <br> B65H <br> B23Q |

Der vorliegende Recherchenbericht wurde für alle Patentansprüche erstellt

| Recherchenort | Abschlußdatum der Recherche | Prüfer |
|---|---|---|
| DEN HAAG | 18 OKTOBER 1990 | HOEFER W.D. |